# EUROPEAN PATENT APPLICATION

(11) **EP 0 625 648 A1**
(43) Date of publication of application: **23.11.1994**
(21) Application number: 94303592.3
(22) Date of filing: 19.05.1994
(51) Int. Cl.: F16D 65/58

(54) **Internal shoe drum brake with automatic adjuster**

(30) Priority: 19.05.1993 GB 9310252
(71) Applicant: LUCAS INDUSTRIES PUBLIC LIMITED COMPANY, Solihull, West Midlands B91 3TX (GB)
(72) Inventor: Griffiths, John, Ebbw Vale, Gwent NP3 5NE (GB); Mortimer, Alan, Cwmbran, Gwent NP44 6JL (GB); Ziomek, Jan, Cwmbran, Gwent NP44 1RZ (GB); Bancroft, Ian John, Pontypool, Gwent NP4 0QY (GB)
(74) Representative: Waite, Anthony William

(57) **Abstract**

An internal shoe drum brake is provided with a strut adjuster (7) extending between a pair of brake shoes (1, 2) and including an adjuster lever (10) pivotally mounted on and cooperating with a main strut part (8). The pivot of the lever (10) is formed by shearing a boss (11) which is received in a slot (12) in the strut part (8) for rotational and linear movement. The boss (11) may be formed with a head (11') and the slot (12) may be open-ended or of keyhole configuration. A return spring (13) has end portions (13A', 13B') received respectively in an opening (14) of the strut part (8) and an opening (15) of the boss (11). A toothed formation (9', 9'') may be formed integrally with the strut part (8) by shearing.

## Description

This invention relates to an internal shoe drum brake, primarily for a motor vehicle, of the general kind having a stationary back-plate carrying a pair of brake shoes which are separable by actuating means into braking engagement with a rotary brake drum, and an automatic adjuster in the form of a strut extending between the shoes and including a pair of strut parts of which one is an adjuster element pivotally mounted on the other part and cooperating with toothed means rigid with the other part, the strut parts being operatively associated respectively with the brake shoes in such a manner that excessive separation of the shoes upon brake actuation results in separation of the adjuster element from the toothed means and angular movement of the element, enabling the element to re-engage the toothed means in a fresh position, upon brake release, to increase the effective length of the strut and thereby set a new outwardly adjusted retracted position of the shoes. An example of such a brake is described in our British Patent No. 1410514.

The adjuster described in our aforesaid patent operates very satisfactorily in normal use on a vehicle, but employs a pivot pin connection between the adjuster element and the other strut part, which pin serves to connect a spring to the adjuster element, the spring acting between the strut parts longitudinally of the strut to urge the adjuster element into engagement with the toothed means. The use of a pivot pin in this manner leads to complications in manufacture and assembly of the components and relatively high production costs.

An object of the invention is to provide an adjuster of the aforesaid kind which may be manufactured in a more economical manner than that described in our aforesaid patent.

In accordance with one feature of the invention, the adjuster element has a boss formed thereon, typically by a cold forming operation, dimensioned to fit within an aperture of the other strut part so as to provide a pivotal connection between the parts. The aperture may conveniently be a slot extending longitudinally of the strut to permit relative longitudinal movement of the strut parts, the boss fitting the aperture closely in a direction transversely of the slot to provide the pivotal connection.

The boss may conveniently be hollow and the adjuster element is typically urged into engagement with the other strut part by a spring of which one end portion is engaged within the hollow boss and the other end portion is connected to the other strut part.

The invention will now be described, by way of example, with reference to the accompanying drawings in which:-
Figure 1 a front elevation of one form of the internal shoe drum brake of the invention;
Figure 2 is a detail, in cross-section, illustrating part of an adjuster mechanism of the brake of Figure 1;
Figure 3 is an exploded view of the components illustrated in Figure 2, illustrating a slightly modified form of main strut part;
Figure 4 is a view similar to Figure 3 illustrating a further modified construction;
Figure 5 is a view on the arrow A of part of Figure 4;
Figure 6 illustrates a brake shoe for reception of an end portion of the strut of Figures 2 to 4, showing such end portion positioned before and after assembly;
Figures 7A, 7B illustrate alternative modified forms of part of the main strut, and
Figure 8 illustrates part of a modified form of the adjuster of the brake of the invention.

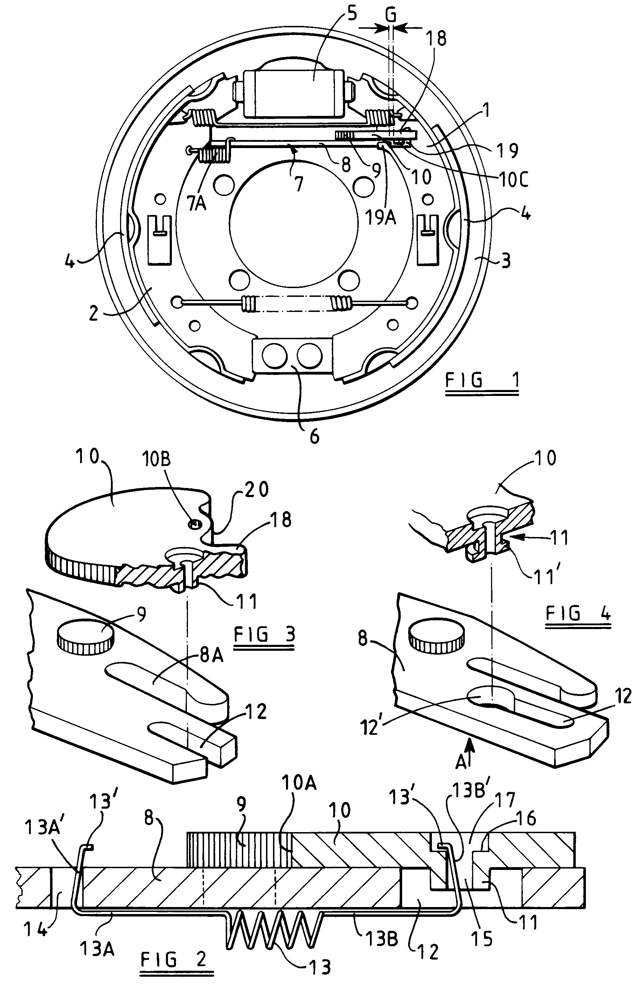

Figures 1 and 2 of the drawings illustrate one form of the internal shoe drum brake of the invention which has a pair of brake shoes 1, 2 mounted on a back plate 3, each of the shoes having a lining of friction material 4. An actuator device, illustrated as an hydraulic cylinder 5, is arranged between one pair of shoe ends and the other ends of the shoes are engaged against a fixed abutment 6. Actuation of the cylinder separates the shoes into braking engagement with a surrounding brake drum (not shown). A strut adjuster 7 extends between the shoes 1 and 2 and is effective to maintain a substantially constant maximum shoe to drum clearance. The adjuster is similar in principle and operation to that illustrated in our earlier British Patent No. 1405094, but embodies modifications, to be described hereafter, which result in the possibility for more economical manufacture and assembly of the adjuster.

The strut 7 forms part of a two-part adjuster assembly, one part being in the form of an elongate plate 8 extending between the shoes and carrying a stud 9 rigidly secured to its upper surface at an intermediate location therealong, the outer surface of the stud having teeth formed thereon, as for example by knurling. The other part of the strut assembly is an adjuster element 10 disposed on the upper surface of the strut part 8 and pivotally connected to this part by means of a hollow cylindrical boss 11 on the underside of the element engaging within an elongate slot 12 formed in the strut part 8 (Figure 2). The boss 11, conveniently cold formed by plunging and piercing, fits closely within the slot in a direction transversely of the slot to permit pivotal movement between the two strut parts, when required, the boss also being able to move linearly along the slot 12 during operation of the adjuster, in the manner to be described. A coil spring 13 lies against the underside of the strut part 8 and has oppositely extending arms 13A, 13B. End portions 13A' and 13B' of the arms extend generally at right angles to the remainder of the arms and are engaged respectively in a through opening 14 in the strut part 8 and through an opening 15 formed in the boss 11. Turned-in portions 13' of the spring lie respectively behind the upper surface of the strut part 14 and behind a shoulder 16 formed between the opening 15 and a widened portion 17 thereof. The particular form of the spring illustrated is convenient in that it is symmetrical and therefore non-handed. It may however be of any other shape and not necessarily non-handed. The edge 10A of the element 10 facing the projection 9 is formed with teeth thereon, as by knurling, corresponding to those on the projection 9, the spring 13 acting to urge the element 10 against the projection 9 so that the respective teeth on the element and projection are held firmly in engagement so as to prevent unwanted relative rotation between the strut parts.

As can be seen from Figure 3, the adjuster element 10 is provided with a projecting arm 18 which, as can be seen from Figure 1, is engaged within a slot 19 in the web of the adjacent shoe 1 and acts to locate the adjuster element relative to that shoe, as well as limiting the maximum adjusting movement of the adjuster lever 10. The element also has a curved surface 20 arranged as a cam and engaged against the edge of the adjacent shoe web for the purpose of setting the adjusted position of the shoe, in the manner described in Patent No. 1410514. The element is semi-sheared at 10B to form a projection 10C on its intended under surface, as can be seen more clearly in Figure 1. The projection lies within the opening 19 and is spaced, in the released condition of the brake, by a distance G from a projection 1 9A which defines one end of the slot 19. The clearance G corresponds to the maximum shoe to drum clearance. The strut part 8 is provided with slots at the respective ends thereof, of which one can be seen at 8A, to receive the adjacent shoe web in use.

When the shoe linings are worn sufficiently to cause the aforesaid clearance G to be taken up during actuation, the adjuster element is pulled away from the stud 9 by the projection 19A acting on the projection 10C, and moved angularly by the shoe about the pivot boss 11 through an angle corresponding to the excess movement of the shoe. When the brake is released, the teeth on the element and stud are re-engaged with the element in a fresh position, so that the shoe is held in an outwardly adjusted position which compensates for the lining wear.

Figure 3, although essentially illustrating the strut embodied in Figures 1 and 2, shows a minor modification in that the slot 12 of the strut part is open ended.

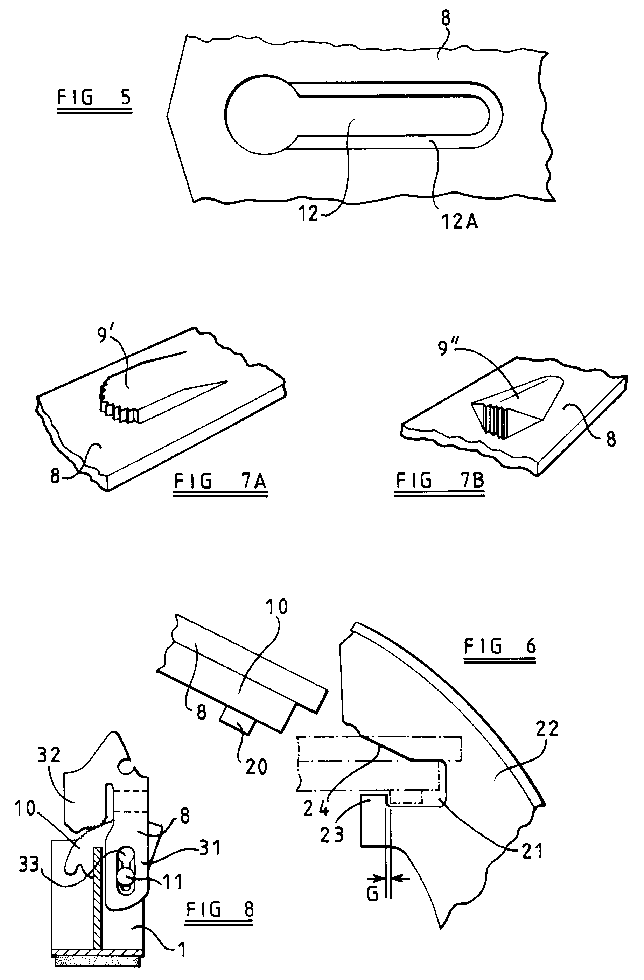

In the alternative arrangement illustrated in Figure 4, the boss 11 is formed, again by plunging and piercing, so as to have a peripheral flange or head 11' spaced from the underside of the element 10. In this embodiment, the slot 12 of the strut part 8 is provided with an enlarged portion 12' to form a keyhole slot, enabling the flange 11' to be inserted through the enlarged slot part 12' and the element then moved along the narrower slot part to its normal operative position. It will be understood that this flanged version of the boss 11 may also be employed with the open ended slot 12 and the element 10 may then simply be engaged on the strut part 8 with the head 11' lying beneath the latter. In either case, the head 11' is spaced from the remainder of the element 10 by a distance very slightly greater than the thickness of the strut part 8 and acts to retain the lever and strut part in adjacent relationship.

As can be seen from Figure 5, the underside of the strut part 8 may be countersunk around the slot 12 at 12A, enabling the head 11' to be formed nearer to the main body of the element 10, which may be desirable when the element 10 is only of sufficient thickness to permit a relatively small length of boss 11 to be formed.

Figure 6 illustrates an arrangement in which the pivotal adjuster lever 10 is mounted beneath the strut part 8, conveniently by way of a boss (not shown) formed this time on the upper surface of the lever 10. A downward projection 20 is formed on the strut part 8 for the purpose of engaging an opening 21 formed in a web 22 of one of the brake shoes. The projection 20 may be cold formed in the same manner as the pivot boss, and, as can be clearly seen in Figure 6, is dimensioned so that a clearance G is left between the projection and an opposed upward projection 23 at the forward extremity of the slot. A wall 24 of the slot is upwardly inclined to provide sufficient space to enable the assembly of strut 10 and adjuster element 8 to be presented at the angle shown in full lines and, with a slot in the strut 10 embracing the shoe web, the assembly can be pivoted downwardly to the position indicated in broken lines with the projection 20 disposed behind the projection 23. It will be seen that outward movement of the shoe will cause the projection 23 to engage the projection 20 after the nominal clearance G has been taken up, and adjustment will take place in the manner described previously.

As can be seen from Figures 7A and 7B, the stud 9 may be dispensed with and an integral toothed formation 9' formed by stamping from the material of the strut 8. An alternative form of toothed formation 9" formed in this manner is shown in Figure 7B.

In the alternative arrangement shown in Figure 8, the strut part 8 is kinked out of the plane of the strut by an amount approximately equal to the thickness of the adjuster element 10 to form an offset arm 31. The teeth of the strut part 8 are formed on a further arm 32 so that, with the adjuster element 10 mounted on the offset arm 31, the teeth of this element may be meshed with those of the arm 32. The boss 11, or other form of pivot, can be seen received within a keyhole slot 33 of the arm 31. In this embodiment, the adjuster element 10 is again moved by the shoe 1 when the brake is actuated with excessive lining wear and the adjuster element 10 pivots to a new position, in which it is held by re-meshing of the teeth upon brake release, in order to hold the brake shoes in an adjusted outward position.

It will be seen that the adjuster of the invention provides several features contributing towards improved economy of manufacture, as compared with some conventional adjusters of similar type. Any of the features described in relation to the various Figures, such as the boss 11, with or without the head 11', the toothed formations 9', 9" on the strut part 8, and the shoe slot 21 receiving the additional projection 20 may be incorporated individually or in any combinations, as required.

## Claims

1. An internal shoe drum brake comprising a stationary back-plate (3) carrying a pair of brake shoes (1, 2) which are separable by actuating means (5) into braking engagement with a rotary brake drum, and an automatic adjuster in the form of a strut (7) extending between the shoes and including a pair of strut parts (8, 10) of which one (10) is an adjuster element pivotally mounted on the other part and cooperating with toothed means (9) rigid with the other part (8), the strut parts being operatively associated respectively with the brake shoes in such a manner that excessive separation of the shoes upon brake actuation results in separation of the adjuster element (10) from the toothed means (9) and angular movement of the element (10), enabling the element to re-engage the toothed means in a fresh position, upon brake release, to increase the effective length of the strut (7) and thereby set a new outwardly adjusted retracted position of the shoes, characterised in that the adjuster element (10) has a boss (11)formed thereon dimensioned to fit within an aperture (12) of the other strut part (8) so as to provide a pivotal connection between the parts (8,10).

2. A brake according to Claim 1, characterised in that the boss (11) is formed on the adjuster element by a cold forming operation.

3. A brake according to Claim 1 or Claim 2, characterised in that the aperture is a slot (12) extending longitudinally of the strut (7) to permit relative longitudinal movement of the strut parts (8, 10), the boss fitting the aperture closely in a direction transversely of the slot to provide the pivotal connection.

4. A brake according to any one of Claims 1 to 3, characterised in that the boss (11) is hollow and the adjuster element (10) is urged into engagement with the other strut part (8) by a spring (13) of which one end portion (13B')is engaged within the hollow boss (11) and the other end portion (13A') is connected to the other strut part (8).

5. A brake according to any one of the preceding claims, characterised in that the boss (11) has a peripheral flange (11') formed at its free end and spaced from the underside of the adjuster element (10), the flange engaging a surface of the strut part (8) facing away from the element (10) to retain the element and strut part in adjacent relationship.

6. A brake according to Claim 5, characterised in that the underside of the strut part (8) is countersunk (12A) around the slot (12) to provide a surface engaged by the flange.

7. A brake according to Claim 5, characterised in that the slot (12) is of keyhole shape and the flanged boss (11) is engaged with the strut part by engaging it through the larger part (12') of the keyhole slot and moving the adjuster element (10) along the slot, with the flange lying adjacent the underside of the strut part, to its normal operative position.

8. A brake according to any one of the preceding claims, characterised in that the toothed means is formed by stamping from the material of the strut part (8) to form an integral toothed formation (9', 9")at one side of the strut part (8).

9. A brake according to any one of Claims 1 to 7, characterised in that the strut part (8) is kinked out of the plane of the strut by a distance approximately equal to the thickness of the adjuster element (10) to form an offset arm (31) which is apertured to receive the boss (11) of the adjuster element (10), the teeth of the strut parts (8) for engagement by the adjuster element being formed on a further arm (32) of the strut part lying in the plane of the strut (7) and being engaged by the teeth of the adjuster element.

10. An automatic adjuster for an internal shoe drum brake, comprising a strut (7) including a pair of strut parts of which one is an adjuster element (10) pivotally mounted on the other part (8) and cooperating with toothed means (9) rigid with the part (8), characterised in that the strut parts are pivotally interconnected by the boss (11) formed on the adjuster element and dimensioned to fit within an aperture (12) of the other part (8) so as to effect a pivotal connection between the parts.

11. An adjuster according to Claim 10, characterised in that the aperture is a slot (12) extending longitudinally of the strut (7) to permit relative longitudinal movement of the strut parts in use, the boss fitting the aperture closely in a direction transversely of the slot to provide the pivotal connection.

12. An adjuster according to Claim 10 or Claim 11, characterised in that the boss (11) is produced by a cold forming operation.

13. An adjuster according to any one of Claims 10 to 12, characterised in that the adjuster element (10) is urged into engagement with the toothed means (9) by a spring (13) engaged at its ends respectively in the aperture (14) of the strut part (8) and an aperture (15) of the boss (11).
